(19) Europäisches Patentamt
European Patent Office
Office européen des brevets

(11) Publication number: 0 109 172 A1

(12) EUROPEAN PATENT APPLICATION

(21) Application number: 83306090.8

(22) Date of filing: 07.10.83

(51) Int. Cl.³: C 07 C 127/22, A 01 N 47/34

(30) Priority: 19.10.82 GB 8229874

(43) Date of publication of application: 23.05.84 Bulletin 84/21

(84) Designated Contracting States: BE DE FR IT NL SE

(71) Applicant: DOW CHEMICAL COMPANY LIMITED, Meadowbank Bath Road, Hounslow Middlesex TW5 9QY (GB)

(72) Inventor: Burgess, Michael John, 5 Mountbatten Road Dersingham, King's Lynn Norfolk (GB)
Inventor: Clifford, David Philip, 4 Heather Close North Wootton, King's Lynn Norfolk (GB)
Inventor: Sewell, Robert Arthur, Paulus Potter Pad 8, NL-4571 NZ Axel (NL)

(74) Representative: Allard, Susan Joyce et al, BOULT, WADE & TENNANT 27 Furnival street, London EC4A 1PQ (GB)

(54) **Novel substituted N-phenyl-N'benzoylureas and their use as insecticides and acaricides.**

(57) The invention provides, as new compounds, the N-phenyl-N'-benzoylureas of the general formula

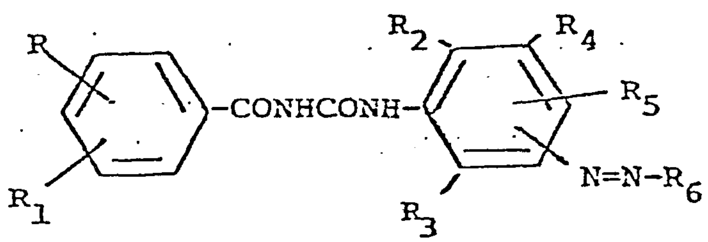

I

wherein R and $R_1$ are each independently a hydrogen or halogen atom, a $C_1$–$C_4$ alkyl or halogeno $C_1$–$C_4$ alkyl group; $R_2$ and $R_3$ are each independently a hydrogen or halogen atom or a $C_1$–$C_4$ alkyl group; $R_4$ and $R_5$ are each independently a hydrogen or halogen atom, or an alkyl, halogenoalkyl, alkoxy, halogenoalkoxy, alkenyl, halogenoalkenyl, alkenyloxy, halogenoalkenyloxy or alkynyl group; and wherein $R_6$ is an eventually substituted phenyl or 2-pyridyl. These compounds are useful as insecticides or acaricides.

EP 0 109 172 A1

# NOVEL SUBSTITUTED N-PHENYL-N'BENZOYL UREAS AND THEIR USE AS INSECTICIDES AND ACARICIDES

The present invention relates to certain novel N-phenyl-N'benzoylureas, to a process for their preparation and to their use as arthropodicides, expecially as insecticides and acaricides.

The invention provides, as new compounds, the N-phenyl-N'benzoylureas of the general formula

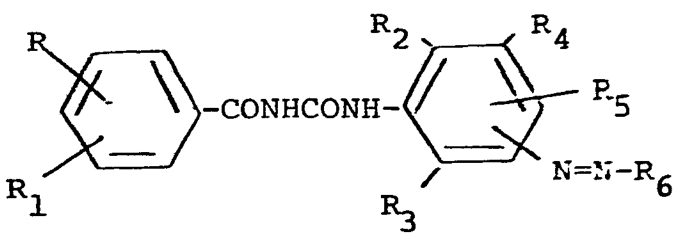

I

wherein R and $R_1$ are each independently a hydrogen or halogen atom, a $C_1$-$c_4$ alkyl or halogeno $C_1$-$C_4$ alkyl group; $R_2$ and $R_3$ are each independently a hydrogen or halogen atom or a $C_1$-$C_4$ alkyl group; $R_4$ and $R_5$ are each independently a hydrogen or halogen atom, or an alkyl, halogenoalkyl, alkoxy, halogenoalkoxy, alkenyl, halogenoalkenyl, alkenyloxy, halogenoalkenyloxy or alkynyl group;

$R_6$ is

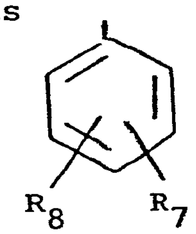

or

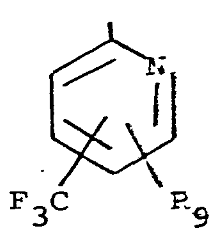

BAD ORIGINAL

wherein $R_7$ and $R_8$ are each independently a hydrogen or halogen atom, or a nitro, alkyl, halogenoalkyl or cyano group; and $R_9$ is a halogen atom or an alkyl or halogenoalkyl group

The present invention also provides processes for the preparation of the benzoylureas of formula I.

In the first of these processes, process (a), a phenylazoaniline of the general formula:

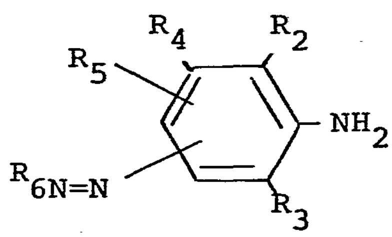

II

wherein $R_2$, $R_3$, $R_4$, $R_5$ and $R_6$ are as defined above is reacted with a benzoylisocyanate of the general formula

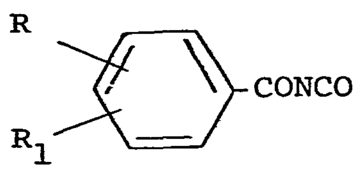

III

wherein R and $R_1$ are as above defined in the presence of an appropriate solvent.

In the second of these processes, process (b) a 4-arylazophenylisocyanate of the general formula

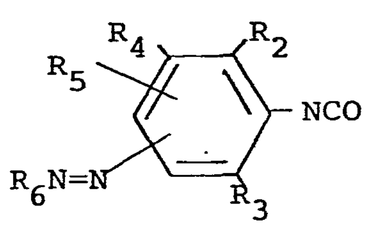

IV

wherein $R_2$, $R_3$, $R_4$, $R_5$ and $R_6$ are as above defined is reacted with a benzamide of the formula

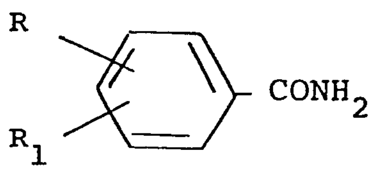

V

wherein R and $R_1$ are as above defined in the presence of an appropriate solvent

If using process (a) 4-phenylazoaniline and 2,6-difluorobenzoylisocyanate are used as the starting materials and using process variant (b) 4-phenylazophenylisocyanate and 2,6-difluorobenzamide are used as starting materials, the courses of the reaction can be represented by the following equations :-

(a)

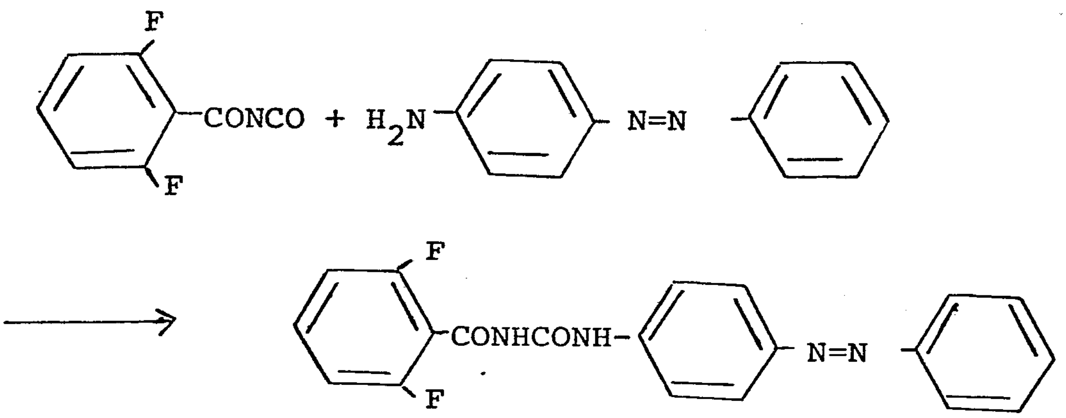

(b)

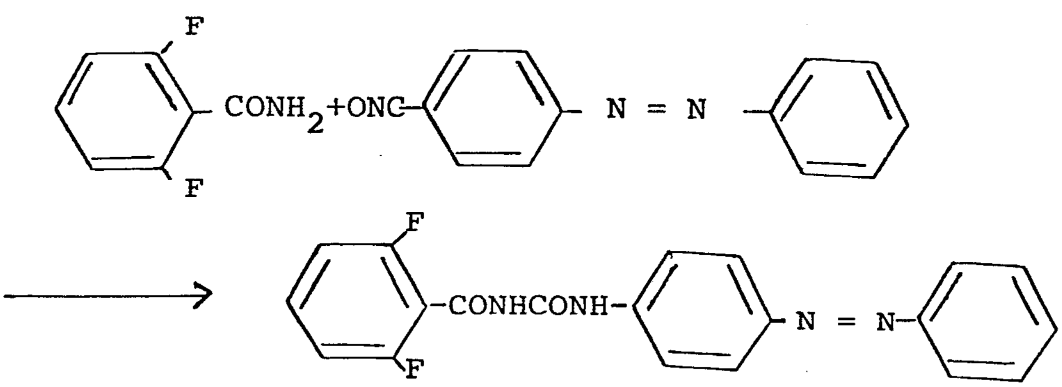

The processes for the preparation of the compounds of the invention are preferably carried out in the presence of suitable solvents and diluents.

Practically all inert organic solvents can be used for this purpose, especially aliphatic and aromatic optionally chlorinated hydrocarbons, ethers, Ketones and nitriles.

The reaction temperature may be varied within a fairly wide range. In general the reaction is carried out at a temperature in the range of from $0^{o}$ to $130^{o}C$.

In general the reaction takes place at atmospheric pressure.

To carry out these processes the reactants are preferably employed in equimolar amounts

The compounds of the present invention are normally crystalline solids having a low solubility in water and having a moderate solubility in many organic solvents. The compounds have low phytotoxicity and have exceptional activity in the control of various undesirable agricultural, household and veterinary insect pests.

Examples of the various insects which can be controlled by the active compounds of the present invention are members of the orders Lepidoptera, Coleoptera, Diptera, Orthoptera, Homoptera, Thysanoptera and Acarina. They are active against normally sensitive and resistant species at some stages of development. Examples of insect pests comprising the above include the tobacco budworm (Heliothis virescens), the beet armyworm (Spodoptera exigua), the Egyptian cotton leafworm (Spodoptera littoralis), the American bollworm (Heliothis armigera), the diamond-back moth (Plutella maculipennis), the gypsy moth (Lymantria dispar), the cutworm (Agrotis segetum), the Mediterranean flour moth (Ephestia Keuhniella), the Colorado potato beetle (Leptinotarsa decimlineata), the mustard beetle (Phaedon cochleariae), the cotton boll weevil (Anthomomus grandis, the Mexican bean beetle (Epilachna varivestis), the khapra beetle (Trogoderma granarium), he housefly (Musca domestica), the lesser housefly (Fannia canicularis), the Mediterranean fruit fly (Ceratitis capitata), the black blow fly (Phormia regina), the cabbage rootfly (Hylemya brassicae), the yellow fever mosquito (Aedes aegypti), the malaria mosquito (Anopheles stephensi), the desert locust (Schistocerca gregaria), the migratory locust (Locusta migratoria), the German cockroach (Blattella germanica), the American cockroach (Periplaneta americana),

the pear psylla (Psylla pyricola), the onion thrips (Thrips tabaci), and the citrus rust mite (Phyllocoptruta oleivora).

The compounds of the present invention are highly active and can be employed to kill insects outright and/or to prevent adult emergence from the juvenile forms of the insect. In such applications, the insect to be controlled and/or its habitat is contacted or treated with an insecticidal amount of one or more of the compounds of the present invention. The compounds may be administered orally to warm blooded animals from which they are excreted unchanged and they effectively combat the larvae of certain insects which inhabit faeces, e.g., the face fly, horn fly and buffalo fly.

For all such uses, the compounds of the present invention can be employed in unmodified form. However, the present invention also includes within its scope the use of an insecticidally-effective amount of the active ingredient in composition form with a material known in the art as a diluent or carrier.

Thus, for example, compositions employing one or a combination of these active ingredients can be in the form of a liquid or a dust, and the adjuvant

employed can be any one of a plurality of materials including aromatic solvents, petroleum distillates, water or other liquid carriers, propellant substances, surface-active dispersing agents, light absorbers and finely-divided carrier solids.

The exact concentration of one or a combination of the compounds of the present invention in a composition thereof with an adjuvant therefore can vary; it is only necessary that one or a combination of the compounds be present in a sufficient amount so as to make possible the application of an insecticidally-effective or inactivating dosage.

Generally, for practical applications, one or a combination of these active ingredients can be broadly applied to the insect larvae or their habitat in compositions containing from 0.0001 to 98 percent by weight, preferably 5 to 50 percent by weight, of the compounds.

The compounds of the present invention or compositions containing them can advantageously be be employed in combination with one or more additional pesticidal compounds. Such additional pesticidal

compounds may be insecticides, nematocides, acaricides, herbicides, fungicides or bactericides which are compatible with the compounds of the present invention in the medium selected for application and not antagonistic to the activity of compounds. Accordingly, in such embodiments, the pesticidal compound is employed as a supplemental toxicant for the same or for a different pesticidal use, or as an additive. The compounds used in combination with the compounds of the invention are generally present in a ratio from 1 to 100 parts of the compound of the present invention to from 100 to 1 parts of the additional compound(s).

The compounds of this invention are, or tend to be, slow acting, i.e., they disrupt the molting of the insect, thereby killing it. As a result, some time can pass before the insects are killed. Accordingly, an increased benefit can be obtained by combining the compounds of this invention with quicker acting insecticides such as, for example, organophosphorus compounds, carbamates and pyrethroids. Because of this different mode of action, the compounds of this invention kill or control the more common insecticides and thus they inhibit or delay the development of resistance to such insecticides.

M I S S I N G

(Found: C,73.87; H, 6.35; N, 19.90%. $C_{13}H_{13}N_3$
requires C,73.91; H, 6.20; N, 19.89%

The anilines listed in Table 1 were prepared in a similar manner.

TABLE 1

| EXAMPLE | COMPOUND | YIELD (%) | M.P. (°C) | % FOUND C | H | N | % CALCULATED C | H | N |
|---|---|---|---|---|---|---|---|---|---|
| 1b | 3,5-dimethyl-4-phenyl-azoaniline | 57 | 67-8 | 74.59 | 6.71 | 18.56 | 74.64 | 6.71 | 18.65 |
| 1c | 3,5-dimethyl-4-(3-nitro-phenylazo)aniline | 43 | 167-9 | 61.92 | 5.48 | 20.59 | 62.21 | 5.22 | 20.73 |
| 1d | 3-methyl-4-(4-nitrophenyl-azo)aniline | 23 | 154-6 | 61.08 | 4.66 | 21.83 | 60.93 | 4.72 | 21.86 |
| 1e | 3,5-dimethyl-4-(4-nitro-phenylazo)aniline | 49 | 159-61 | 62.26 | 5.09 | 20.83 | 62.21 | 5.22 | 20.73 |
| 1f | 3-methyl-4-(4-chlorophenyl-azo)aniline | 30 | oil | 63.29 | 5.01 | 17.42 | 63.55 | 4.92 | 17.10 |
| 1g | 3,5-dimethyl-4-(3,5-dimethylphenylazo)aniline | 37 | 93-5 | 76.76 | 6.15 | 16.70 | 76.77 | 6.44 | 16.79 |
| 1h | 3,5-dimethyl-4-(4-chloro-3-nitrophenylazo)aniline | 54 | 166-7 | 55.10 | 4.50 | 18.48 | 55.18 | 4.30 | 18.39 |
| 1i | 3,5-dimethyl-4-(4-chloro-2-cyanophenylazo)aniline | 33 | 170-3 | 63.06 | 4.83 | 20.53 | 63.27 | 4.60 | 19.63 |

Preparation 2

(a) The preparation of 3-chloro-4-(4-nitrophenylazo)aniline

4-Nitroaniline 8.9g, 0.064 mol) was dissolved with warming in a mixture of concentrated hydrochloric acid (20 mls) and water (20 mls) and the solution poured onto stirred ice (52g). This was cooled to <5°C and a solution of sodium nitrite (5g, 0.072 mol) in water (15 mls) added with stirring, the reaction temperature being maintained at <5°C. The reaction mixture was then stirred at 0-5°C for half an hour and sodium acetate trihydrate (20g) added.

The buffered solution of the diazonium salt was added to a vigorously stirred, cooled solution of sodium 3-chloroanilinomethanesulphonate (17.5g, 0.072 mol) in water (250 mls). The reaction mixture was refrigerated overnight and filtered. The red solid was slurried in 5% sodium hydroxide solution (400 mls) and gradually heated to 95°C over two hours. This was cooled, filtered and the solid crystallised from dilute ethanol to give 3-chloro-4-(4-nitrophenylazo)aniline (12.6g, 71%), M.P. 207-9°C. $\nu$ max (Nujol) 3500, 3406, $cm^{-1}$. $\delta$H (DMSO-$d_6$) 6.2 (2H, br.s), 6.5-6.9 (2H, m), 7.7-8.5 (5H, m) ppm.

(Found: C, 52.14; H, 3.34; N, 20.28. $C_{12}H_9ClN_4O_2$ requires C, 52.09; H, 3.29; N, 20.25%)

(b) 3,5-Dimethyl-4-(4-chlorophenylazo)aniline was prepared in a similar manner (red oil, 37%).

Found: C, 64.48; H, 5.20; N,16.48. $C_{14}H_{14}ClN_3$
requires C, 64.74; H, 5.43; N,16.18%

(c) 4-(4-Nitrophenylazo)-3-(1,1,2,2-tetrafluoroethoxy)-aniline was prepared in a similar manner (red crystals, 33%) M.P. 168°C.

Found: C, 47.12; H, 2.78; N, 15.76. $C_{14}H_{10}F_4N_4O_3$
requires: C, 46.94; H, 2.81; N, 15.64%.

Preparation 3

(a) The preparation of 3-phenylazoaniline

3-Aminoacetanilide (10g, 0.067 mol) was dissolved in a mixture of acetic acid (12 mls) and ethanol (64 mls) and cooled to 5°C. To this was added a cooled (5°C) solution of nitrosobenzene (7.65g 0.071 mol) in ethanol (50 mls) with stirring. The reaction mixture was stirred at 5°C for two hours, allowed to warm to room temperature and poured into water (100 mls). The resulting mixture was then filtered, the black solid dried and purified by chromatography (silica gel: dichloromethane) and recrystallization from petroleum ether (80:100) to give 3-phenylazoacetanilide (8.33g, 53%) M.P. 133-4°C.

This solid (5g, 0.021 mol) was heated under reflux with potassium hydroxide (2.95g, 0.053 mol) in water (5 mls) and ethanol (50 mls) to give, after work-up, 3-phenylazoaniline (3.7g, 89%), M.P. 54-6°C.

In a similar manner, 5-amino-2-fluoroacetanilide was condensed with nitrosobenzene to give 2-fluoro-5-phenylazoacetanilide in 17% yield, M.P. 165-166°C.

(Found: C, 65.27; H, 4.70; N, 16.32%. $C_{14}H_{12}FN_3O$ requires C, 65.36; H, 4.70; N, 16.33%. This was then hydrolysed with potassium hydroxide in aqueous methanol to give 2-fluoro-5-phenylazoaniline (3b) in quantitative yield which was used without further purification.

PREPARATION OF SUBSTITUTED N-BENZOYL-N'-PHENYLAZOPHENYL-UREAS

Example 1

(a) The preparation of N-(2,6-difluorobenzoyl)-N'-(4-phenylazophenyl)-urea

A solution of 4-phenylazoaniline (3.35g, 0.017 mole) in toluene (50 ml) was added to a stirred solution of 2,6-difluorobenzoylisocyanate (3.42g, 0.0187 mole) in toluene (3.5 mls). The resulting precipitate was filtered and washed firstly with chilled toluene, and then petroleum ether (40-60°). Yield 5.64g, M.P. 241-243°C.

Found: C, 63.23; H, 3.69; N, 14.70. $C_{20}H_{14}F_2N_4O_2$
Required: C, 63.16; H, 3.71; N, 14.73%

Employing the above procedure and appropriate substituted phenylazonilines and isocyanate compounds such as 2-fluorobenzoylisocyanate, 2-chlorobenzoylisocyanate, 2,6-dichlorobenzoylisocyanate, 3-chlorobenzoylisocyanate, 4-chlorobenzoylisocyanate, benzoylisocyanate, 2-methylbenzoylisocyanate, 2,6-dimethylbenzoylisocyanate, 2-trifluoromethylbenzoylisocyanate and 3-trifluoromethyl-benzoylisocyanate, examples 2-84 were prepared. The results are detailed in Table 2.

(b) The preparation of N-(2,6-difluorobenzoyl)-N'-(4-phenylazophenyl) -urea

A mixture of 4-phenylazoaniline hydrochloride (23.37g, 0.1 mole) and trichloromethyl chloroformate (14.84g, 0.075 moles) in 1,4-Dioxan (100 ml) was heated with stirring under reflux for 4 hours. The solvent and excess trichloromethyl chloroformate were distilled off under atmospheric pressure to a maximum pot temperature of 130°C. The resultant oil was cooled and a thin film infra red spectra showed the presence of a strong absorption at 2275 $cm^{-1}$ (characteristic of -N=C=O absorption). The crude isocyanate was

diluted with a mixture of toluene (100 ml) and 2,6-difluorobenzamide (15.71g, 0.1 mole) and the reaction mixture heated with stirring under reflux for 1.5 hrs. After cooling, the resultant solid was collected by filtration and washed with chilled toluene and then 40-60 petroleum ether. The crude solid was recrystallised from ethyl methyl ketone to yield an orange crystalline solid. Yield 22.7g, 60%, 241-242°C.

Required for $C_{20}H_{14}F_2N_4O_2$ - C, 63.16; H, 3.71; N, 14.73%

Found: C, 63.39; H, 3.73; N, 14.82%

TABLE 2 4-Phenylazo Derivatives

| Example | R | $R_1$ | $R_2$ | $R_3$ | $R_4$ | $R_5$ | $R_7$ | $R_8$ | Mpt (°C) | Yield (%) | Mol Formula | Expected/Found % C | H | N | Vmax ($cm^{-1}$) |
|---|---|---|---|---|---|---|---|---|---|---|---|---|---|---|---|
| 2 | H | H | H | H | $CH_3$ | $CH_3$ | H | H | 231-33 | 85 | $C_{22}H_{20}N_4O_2$ | 70.94<br>70.99 | 5.42<br>5.56 | 15.05<br>15.27 | 1700 |
| 3 | 2-Cl | H | H | H | H | H | H | H | 270-71 | 90 | $C_{20}H_{15}ClN_4O_2$ | 63.41<br>63.57 | 3.99<br>4.04 | 14.79<br>14.89 | 1712,<br>1688 |
| 4 | 2-Cl | H | $CH_3$ | H | H | H | 2-$CH_3$ | H | 212-15 | 70 | $C_{22}H_{19}ClN_4O_2$ | 64.95<br>64.85 | 4.71<br>4.85 | 13.77<br>13.99 | 1708 |
| 5 | 2-Cl | H | H | H | $CH_3$ | H | H | H | 222-25 | 79 | $C_{21}H_{17}ClN_4O_2$ | 64.21<br>64.33 | 4.36<br>4.51 | 14.26<br>14.42 | 1714,<br>1680 |
| 6 | 2-Cl | H | H | H | $CH_3$ | H | 4-$NO_2$ | H | 245-57 | 70 | $C_{21}H_{16}ClN_5O_4$ | 57.61<br>57.67 | 3.68<br>3.74 | 16.00<br>16.26 | 1709,<br>1692 |
| 7 | 2-Cl | H | H | H | $CH_3O$ | H | 2-F | 4-F | 206-8 | 55 | $C_{21}H_{15}ClF_2N_4O_3$ | 56.70<br>56.53 | 3.40<br>3.37 | 12.60<br>12.61 | 1711,<br>1679 |
| 8 | 2-Cl | H | Br | Br | H | H | H | H | 214-16 | 57 | $C_{20}H_{13}Br_2ClN_4O_2$ | 44.85<br>44.90 | 2.26<br>2.61 | 10.46<br>11.12 | 1710,<br>1690 |
| 9 | 2-Cl | H | H | H | F | F | 4-$CF_3$ | H | 213-16 | 31 | $C_{21}H_{12}ClF_5N_4O_2$ | 52.24<br>52.17 | 2.51<br>2.57 | 11.60<br>11.47 | 1705,<br>1697 |
| 10 | 2-Cl | H | $CH_3$ | H | $CH_3$ | H | H | H | 214-15 | 57 | $C_{22}H_{19}ClN_4O_2$ | 64.95<br>64.91 | 4.71<br>4.83 | 13.77<br>13.72 | 1696 |
| 11 | 2-Cl | H | $CH_3$ | $CH_3$ | H | H | H | H | 196-97 | 53 | $C_{22}H_{19}ClN_4O_2$ | 64.95 | 4.71 | 13.77 | 1711,<br>1675 |
| 12 | 2-Cl | H | H | H | $CH_3$ | $CH_3$ | H | H | 211-14 | 79 | $C_{22}H_{19}ClN_4O_2$ | 64.95<br>64.86 | 4.71<br>4.84 | 13.77<br>13.84 | 1704 |
| 13 | 2-Cl | H | H | H | $CH_3$ | $CH_3$ | 4-$NO_2$ | H | 256-59 | 72 | $C_{22}H_{18}ClN_5O_4$ | 58.48<br>58.53 | 4.02<br>4.23 | 15.50<br>15.65 | 1703 |
| 14 | 2-Cl | H | H | H | $CH_3$ | $CH_3$ | 2-$CF_3$ | 4-Cl | 219-20 | 49 | $C_{22}H_{17}Cl_2F_3N_4O_2$ | 54.25<br>54.25 | 3.36<br>3.69 | 11.00<br>11.65 | 1700 |
| 15 | 2-Cl | H | H | H | $CH_3$ | $CH_3$ | 2-CN | 4-Cl | 250 | 77 | $C_{23}H_{17}Cl_2N_5O_2$ | 59.24<br>59.47 | 3.67<br>3.82 | 15.02<br>15.21 | 1700 |
| 16 | 2-F | H | H | H | H | H | H | H | 225-27 | 62 | $C_{20}H_{15}FN_4O_2$ | 66.29<br>66.23 | 4.17<br>4.23 | 15.46<br>15.42 | 1706,<br>1678 |
| 17 | 2-F | H | H | H | Cl | H | 4-$NO_2$ | H | 285-89 | 57 | $C_{20}H_{13}ClFN_5O_4$ | 54.37<br>54.11 | 2.97<br>3.16 | 15.85<br>16.15 | 1730 |

| | | | | | | | | | | | | | | | |
|---|---|---|---|---|---|---|---|---|---|---|---|---|---|---|---|
| 18 | 2-F | H | H | H | F | H | 4-$CF_3$ | H | 229-31 | 57 | $C_{21}H_{13}F_5N_4O_2$ | 58.26<br>58.39 | 2.92<br>3.19 | 12.50<br>12.63 | 1710,<br>1675 |
| 19 | 2-F | H | $CH_3$ | H | H | H | 2-$CH_3$ | H | 204-05 | 63 | $C_{22}H_{19}FN_4O_2$ | 67.68<br>67.57 | 4.91<br>4.86 | 14.35<br>14.17 | 1710,<br>1688 |
| 20 | 2-F | H | H | H | $CH_3$ | H | H | H | 182-85 | 63 | $C_{21}H_{17}FN_4O_2$ | 67.01<br>67.17 | 4.55<br>4.66 | 14.89<br>15.04 | 1705,<br>1675 |
| 21 | 2-F | H | H | H | $CH_3$ | H | 4-$NO_2$ | H | 272-77 | 76 | $C_{21}H_{16}FN_5O_4$ | 59.86<br>59.74 | 3.83<br>3.93 | 16.62<br>16.70 | 1696 |
| 22 | 2-F | H | H | H | $CH_3O$ | H | 2-F | 4-F | 218-20 | 53 | $C_{21}H_{15}F_3N_4O_3$ | 58.88<br>58.60 | 3.53<br>3.75 | 13.08<br>13.75 | 1711,<br>1676 |
| 23 | 2-F | H | Br | Br | H | H | H | H | 205-07 | 53 | $C_{20}H_{13}Br_2FN_4O_2$ | 46.18<br>46.57 | 2.52<br>2.60 | 10.77<br>10.84 | 1685 |
| 24 | 2-F | H | H | H | F | F | 4-$CF_3$ | H | 229-30 | 28 | $C_{21}H_{12}F_6N_4O_2$ | 54.09<br>54.09 | 2.59<br>2.28 | 12.01<br>12.14 | 1700 |
| 25 | 2-F | H | $CH_3$ | $CH_3$ | H | H | H | H | 170-72 | 70 | $C_{22}H_{19}FN_4O_2$ | 67.87<br>67.78 | 4.91<br>4.72 | 14.35<br>13.63 | 1670 |
| 26 | 2-F | H | $CH_3$ | H | $CH_3$ | H | H | H | 212-14 | 63 | $C_{22}H_{19}FN_4O_2$ | 67.68<br>67.53 | 4.91<br>5.00 | 14.35<br>14.25 | 1725,<br>1710 |
| 27 | 2-F | H | $CH_3$ | H | H | $CH_3$ | H | H | 208-09 | 40 | $C_{22}H_{19}FN_4O_2$ | 67.68<br>67.92 | 4.91<br>5.19 | 14.35<br>14.41 | 1690 |
| 28 | 2-F | H | H | H | $CH_3$ | $CH_3$ | H | H | 185 | | $C_{22}H_{19}FN_4O_2$ | 67.68<br>67.65 | 4.91<br>5.04 | 14.35<br>14.88 | 1710,<br>1697 |
| 29 | 2-F | H | H | H | $CH_3$ | $CH_3$ | 4-$NO_2$ | H | 189-94 | 50 | $C_{22}H_{18}FN_5O_4$ | 60.69<br>60.63 | 4.17<br>4.37 | 16.08<br>16.38 | 1709,<br>1702 |
| 30 | 2-F | H | H | H | $CH_3$ | $CH_3$ | 2-$CF_3$ | 4-Cl | 222-24 | 63 | $C_{23}H_{17}F_4ClN_4O_2$ | 56.05<br>55.90 | 3.48<br>3.71 | 11.37<br>12.01 | 1700 |
| 31 | 2-F | H | H | H | $CH_3$ | $CH_3$ | 3-$NO_2$ | 4-Cl | 258-61 | 38 | $C_{22}H_{17}ClFN_5O_4$ | 56.24<br>56.35 | 3.65<br>3.77 | 14.91<br>14.30 | 1713 |
| 32 | 2-$CH_3$ | H | H | H | H | H | H | H | 245-47 | 60 | $C_{21}H_{18}N_4O_2$ | 70.38<br>70.25 | 5.06<br>5.12 | 15.63<br>15.73 | 1711,<br>1666 |
| 33 | 2-$CH_3$ | H | $CH_3$ | H | H | H | 2-$CH_3$ | H | 232-34 | 75 | $C_{23}H_{22}N_4O_2$ | 71.48<br>71.51 | 5.74<br>5.75 | 14.50<br>14.52 | 1713 |

| | | | | | | | | | | | | | | | |
|---|---|---|---|---|---|---|---|---|---|---|---|---|---|---|---|
| 34 | 2-$CH_3$ | H | Br | Br | H | H | H | H | 220-22 | 52 | $C_{21}H_{16}Br_2N_4O_2$ | 48.86<br>48.91 | 3.12<br>3.29 | 10.85<br>10.62 | 1680 |
| 35 | 2-$CH_3$ | H | H | H | F | F | H | 4-$CF_3$ | 247-49 | 26 | $C_{22}H_{15}F_5N_4O_2$ | 57.15<br>57.13 | 3.27<br>3.30 | 12.12<br>11.91 | 1709,<br>1697 |
| 36 | 2-$CH_3$ | H | $CH_3$ | H | $CH_3$ | H | H | H | 221-26 | 64 | $C_{23}H_{22}N_4O_2$ | 71.48<br>71.31 | 5.74<br>5.88 | 14.50<br>14.65 | 1726,<br>1710 |
| 37 | 2-$CH_3$ | H | $CH_3$ | H | H | $CH_3$ | H | H | 231-04 | 68 | $C_{23}H_{22}N_4O_2$ | 71.48<br>71.29 | 5.74<br>5.78 | 14.50<br>14.79 | 1710 |
| 38 | 2-$CH_3$ | H | H | H | $CH_3$ | $CH_3$ | H | H | 216 | 60 | $C_{23}H_{22}N_4O_2$ | 71.48<br>71.56 | 5.74<br>5.91 | 14.50<br>14.59 | 1703 |
| 39 | 2-$CF_3$ | H | H | H | $CH_3$ | $CH_3$ | H | H | 207 | 59 | $C_{23}H_{19}F_3N_4O_2$ | 62.72<br>62.80 | 4.35<br>4.56 | 12.72<br>13.04 | 1710,<br>1690 |
| 40 | 3-Cl | H | H | H | $CH_3$ | $CH_3$ | H | H | 205-06 | 80 | $C_{22}H_{19}ClN_4O_2$ | 64.95<br>64.11 | 4.71<br>4.95 | 13.77<br>14.01 | 1690 |
| 41 | 3-$CH_3$ | H | $CH_3$ | H | H | H | 2-$CH_3$ | H | 335-37 | 82 | $C_{23}H_{22}N_4O_2$ | 71.48<br>71.52 | 5.74<br>5.81 | 14.50<br>14.47 | 1700 |
| 42 | 3-$CH_3$ | H | H | H | $CH_3$ | $CH_3$ | H | H | 210-11 | 70 | $C_{23}H_{22}N_4O_2$ | 71.48<br>71.39 | 5.74<br>5.92 | 14.50<br>14.56 | 1702 |
| 43 | 3-$CF_3$ | H | H | H | $CH_3$ | $CH_3$ | H | H | 218 | 90 | $C_{23}H_{19}F_3N_4O_2$ | 62.72<br>62.64 | 4.35<br>4.42 | 12.72<br>12.81 | 1700 |
| 44 | 4-Cl | H | $CH_3$ | H | H | H | 2-$CH_3$ | H | 270-73 | 71 | $C_{22}H_{19}ClN_4O_2$ | 64.95<br>65.25 | 4.71<br>4.71 | 13.77<br>13.84 | 1712 |
| 45 | 4-Cl | H | H | H | $CH_3$ | $CH_3$ | H | H | 265 | 83 | $C_{22}H_{19}ClN_4O_2$ | 64.95<br>64.88 | 4.71<br>4.73 | 13.77<br>13.94 | 1710,<br>1698 |
| 46 | 4-$CH_3$ | H | H | H | H | H | H | H | 285-86 | 27 | $C_{21}H_{18}N_4O_2$ | 70.38<br>70.37 | 5.06<br>5.02 | 15.63<br>15.62 | 1692,<br>1663 |
| 47 | 4-$CH_3$ | H | H | H | $CH_3$ | $CH_3$ | H | H | 248-50 | 50 | $C_{23}H_{22}N_4O_2$ | 71.48<br>71.46 | 5.74<br>5.80 | 14.50<br>14.46 | 1690 |
| 48 | 2-Cl | 6-Cl | $CH_3$ | H | H | H | 2-$CH_3$ | H | 208-10 | 52 | $C_{22}H_{18}Cl_2N_4O_2$ | 59.88<br>59.83 | 4.11<br>4.26 | 12.70<br>12.78 | 1700 |

| | | | | | | | | | | | | | | |
|---|---|---|---|---|---|---|---|---|---|---|---|---|---|---|
| 49 | 2-Cl | 6-Cl | Br | Br | H | H | H | H | 220-22 | 55 | $C_{20}H_{12}Br_2F_2N_4O_2$ | 42.06<br>42.46 | 2.12<br>2.13 | 9.81<br>10.07 | 1700 |
| 50 | 2-Cl | 6-Cl | H | H | F | F | 4-$CF_3$ | H | 233-34 | 23 | $C_{21}H_{11}Cl_2F_5N_4O_2$ | 48.76<br>48.98 | 2.14<br>2.09 | 10.83<br>10.76 | 1708,<br>1690 |
| 51 | 2-Cl | 6-Cl | $CH_3$ | H | $CH_3$ | H | H | H | 256-57 | 65 | $C_{22}H_{18}Cl_2N_4O_2$ | 59.88<br>59.95 | 4.11<br>4.16 | 12.70<br>12.69 | 1700 |
| 52 | 2-Cl | 6-Cl | $CH_3$ | H | H | $CH_3$ | H | H | 179-80 | 48 | $C_{22}H_{18}Cl_2N_4O_2$ | 59.88<br>60.03 | 4.11<br>4.18 | 12.70<br>12.77 | 1700 |
| 53 | 2-Cl | 6-Cl | H | H | $CH_3$ | $CH_3$ | H | H | 250 | 69 | $C_{22}H_{18}Cl_2N_4O_2$ | 59.88<br>60.00 | 4.11<br>4.18 | 12.70<br>12.68 | 1712,<br>1695 |
| 54 | 2-Cl | 6-Cl | H | H | $CH_3$ | $CH_3$ | 3-$NO_2$ | 4-Cl | 251-55 | 42 | $C_{22}H_{16}Cl_3N_5O_4$ | 50.74<br>50.54 | 3.10<br>3.20 | 13.45<br>12.83 | 1705 |
| 55 | 2-F | 6-F | H | H | H | H | 4-$NO_2$ | H | 247-51 | 40 | $C_{20}H_{13}F_2N_5O_4$ | 56.48<br>56.40 | 3.08<br>3.13 | 16.47<br>16.19 | 1712,<br>1686 |
| 56 | 2-F | 6-F | H | H | Cl | H | 4-$NO_2$ | H | 267-71 | 75 | $C_{20}H_{12}ClF_2N_5O_4$ | 52.24<br>52.29 | 2.63<br>2.75 | 15.23<br>15.10 | 1720,<br>1681 |
| 57 | 2-F | 6-F | H | H | F | H | 4-$CF_3$ | H | 256-59 | 53 | $C_{21}H_{12}F_6N_4O_2$ | 54.09<br>53.99 | 2.59<br>2.73 | 12.01<br>12.14 | 1710,<br>1692 |
| 58 | 2-F | 6-F | $CH_3$ | H | H | H | 2-$CH_3$ | H | 206-08 | 65 | $C_{22}H_{18}F_2N_4O_2$ | 64.70<br>65.01 | 4.44<br>4.67 | 13.72<br>13.41 | 1712,<br>1692 |
| 59 | 2-F | 6-F | H | H | $CH_3$ | H | H | H | 211-13 | 63 | $C_{21}H_{16}F_2N_4O_2$ | 63.96<br>63.89 | 4.09<br>4.05 | 14.21<br>14.24 | 1709,<br>1680 |
| 60 | 2-F | 6-F | H | H | $CH_3$ | H | 4-Cl | H | 240-42 | 49 | $C_{21}H_{15}ClF_2N_4O_2$ | 58.82<br>58.79 | 3.53<br>3.40 | 13.07<br>13.22 | 1701 |
| 61 | 2-F | 6-F | H | H | $CH_3$ | H | 4-$NO_2$ | H | 240-43 | 56 | $C_{21}H_{15}F_2N_5O_4$ | 57.41<br>57.54 | 3.44<br>3.47 | 15.94<br>15.84 | 1708,<br>1685 |
| 62 | 2-F | 6-F | H | H | $OCH_3$ | H | 2-F | 4-F | 219-22 | 49 | $C_{21}H_{14}F_4N_4O_3$ | 56.51<br>56.32 | 3.16<br>3.27 | 12.55<br>12.53 | 1712,<br>1682 |
| 63 | 2-F | 6-F | H | H | $OCF_2CCl_2H$ | H | H | H | 220-21 | 37 | $C_{22}H_{14}Cl_2F_4N_4O_3$ | 49.92<br>49.61 | 2.67<br>2.20 | 10.59<br>9.81 | 1710,<br>1680 |
| 64 | 2-F | 6-F | H | H | $OCF_2CF_2H$ | H | 4-$NO_2$ | H | 249 | 47 | $C_{22}H_{13}F_6N_5O_5$ | 48.81<br>48.95 | 2.42<br>2.44 | 12.94<br>12.96 | 1710,<br>1685 |

| | | | | | | | | | | | | | | | |
|---|---|---|---|---|---|---|---|---|---|---|---|---|---|---|---|
| 65 | 2-F | 6-F | Br | Br | H | H | H | H | 224-25 | 60 | $C_{20}H_{12}Br_2F_2N_4O_2$ | 44.61<br>44.89 | 2.23<br>2.36 | 10.41<br>10.25 | 1710,<br>1690 |
| 66 | 2-F | 6-F | F | H | H | F | 4-$CF_3$ | H | 217-19 | 37 | $C_{21}H_{11}F_7N_4O_2$ | 52.08<br>52.60 | 2.29<br>2.27 | 11.57<br>11.21 | 1706,<br>1690 |
| 67 | 2-F | 6-F | H | H | F | F | 4-$CF_3$ | H | 253-54 | 37 | $C_{21}H_{11}F_7N_4O_2$ | 52.08<br>51.98 | 2.29<br>2.14 | 11.57<br>11.48 | 1692 |
| 68 | 2-F | 6-F | $CH_3$ | $CH_3$ | H | H | H | H | 227-28 | 49 | $C_{22}H_{18}F_2N_4O_2$ | 64.70<br>64.30 | 4.44<br>4.32 | 13.72<br>13.66 | 1695 |
| 69 | 2-F | 6-F | $CH_3$ | H | $CH_3$ | H | H | H | 247-48 | 55 | $C_{22}H_{18}F_2N_4O_2$ | 64.70<br>64.70 | 4.44<br>4.55 | 13.72<br>13.76 | 1702,<br>1693 |
| 70 | 2-F | 6-F | $CH_3$ | H | H | $CH_3$ | H | H | 201-02 | 32 | $C_{22}H_{18}F_2N_4O_2$ | 64.70<br>64.90 | 4.44<br>4.56 | 12.70<br>13.87 | 1698 |
| 71 | 2-F | 6-F | H | H | $CH_3$ | $CH_3$ | H | H | 208-10 | 57 | $C_{22}H_{18}F_2N_4O_2$ | 64.70<br>64.74 | 4.44<br>4.58 | 13.72<br>13.88 | 1711,<br>1693 |
| 72 | 2-F | 6-F | H | H | $CH_3$ | $CH_3$ | 4-Cl | H | 240-44 | 50 | $C_{22}H_{17}ClF_2N_4O_2$ | 59.67<br>59.76 | 3.87<br>3.82 | 12.65<br>12.63 | 1702,<br>1686 |
| 73 | 2-F | 6-F | H | H | $CH_3$ | $CH_3$ | 3-$NO_2$ | H | 231-34 | 81 | $C_{22}H_{17}F_2N_5O_4$ | 58.28<br>58.44 | 3.78<br>3.72 | 15.88<br>15.86 | 1720,<br>1680 |
| 74 | 2-F | 6-F | H | H | $CH_3$ | $CH_3$ | 4-$NO_2$ | H | 231-34 | 59 | $C_{22}H_{17}F_2N_5O_4$ | 58.28<br>58.21 | 3.78<br>3.85 | 15.45<br>15.42 | 1699,<br>1683 |
| 75 | 2-F | 6-F | H | H | $CH_3$ | $CH_3$ | 2-$CF_3$ | 4-Cl | 236-39 | 62 | $C_{23}H_{16}ClF_5N_4O_2$ | 54.08<br>54.18 | 3.16<br>3.27 | 10.97<br>11.02 | 1707,<br>1700 |
| 76 | 2-F | 6-F | H | H | $CH_3$ | $CH_3$ | 2-CN | 4-Cl | 259-61 | 77 | $C_{23}H_{16}ClF_2N_5O_2$ | 59.05<br>58.99 | 3.45<br>3.46 | 14.97<br>14.93 | 1700 |
| 77 | 2-F | 6-F | H | H | $CH_3$ | $CH_3$ | 3-$CH_3$ | 5-$CH_3$ | 210-12 | 49 | $C_{24}H_{22}F_2N_4O_2$ | 66.05<br>66.05 | 5.08<br>5.26 | 12.84<br>12.82 | 1710,<br>1691 |
| 78 | 2-F | 6-F | H | H | $CH_3$ | $CH_3$ | 3-$NO_2$ | 4-Cl | 264-66 | 34 | $C_{22}H_{16}ClF_2N_5O_4$ | 54.16<br>54.34 | 3.31<br>3.39 | 14.36<br>14.34 | 1695 |
| 79 | 2-$CH_3$ | 6-$CH_3$ | H | H | $CH_3$ | $CH_3$ | H | H | 212 | 72 | $C_{24}H_{24}N_4O_2$ | 71.98<br>72.06 | 6.04<br>6.01 | 13.99<br>13.78 | 1703,<br>1680 |

<u>3-Phenylazo Derivatives</u>

| | | | | | | | | | | | | | | | |
|---|---|---|---|---|---|---|---|---|---|---|---|---|---|---|---|
| 80 | H | H | H | H | H | H | H | H | 208-11 | 64 | $C_{20}H_{16}N_4O_2$ | 69.76<br>69.55 | 4.68<br>4.39 | 16.27<br>16.30 | 1697 |
| 81 | 2-Cl | H | H | H | H | H | H | H | 192-94 | 69 | $C_{20}H_{15}ClN_4O_2$ | 63.41<br>63.53 | 3.99<br>4.19 | 14.79<br>14.69 | 1705,<br>1699 |
| 82 | 2-F | H | H | H | H | H | H | H | 195-97 | 73 | $C_{20}H_{15}FN_4O_2$ | 66.29<br>66.00 | 4.17<br>4.23 | 15.46<br>15.30 | 1703,<br>1665 |
| 83 | 2-F | 6-F | H | H | H | H | H | H | 188-90 | 67 | $C_{20}H_{14}F_2N_4O_2$ | 63.16<br>63.14 | 3.71<br>3.58 | 14.73<br>14.70 | 1710,<br>1700 |
| 84 | 2-F | 6-F | F | H | H | H | H | H | 216-18 | 52 | $C_{20}H_{13}F_3N_4O_2$ | 60.31<br>60.32 | 3.29<br>3.48 | 14.07<br>14.10 | 1710,<br>1685 |

INSECTICIDAL EVALUATION

Test Procedure I

*Spodoptera littoralis* (Egyptian cotton leafworm)

Larvicide assessments

Cotton plants are grown to four true leaves of 7-8 cm diameter. The test compound was prepared as an aqueous/ acetone solution or suspension at the required concentration. The foliar parts of the cotton plant are dipped in the test medium for a 10 second period. After drying they were kept in a glasshouse at a temperature of 20 to 25°C with a minimum photoperiod of 12 hours.

Individual leaves from each treatment were removed and placed in separate 9 cm diameter plastic petri dishes where they were infested with ten, 3rd instar larvae of *Spodoptera littoralis*. The experimental units were kept in an environmental room at 25°C, 70% humidity with a photoperiod of 16 hours. The leaves in each unit were replaced daily with leaves from plants of the same treatment i.e., 0, 1, 2 and 3 days.

Assessment was made on the fourth day as a comparison of treated with untreated controls and expressed as a percentage mortality.

In a similar manner the third instar larvae of *Plutella*

xylostella (Diamond-backed moth) were tested and Heliothis viriscens (tobacco budworm).

The results of the test procedures were assessed upon a scale of 1 - 5, where

1 = 90-100% mortality

2 = 75-89

3 = 50-74

4 = 25-49

5 = 0-24

These data are summarised in Table 3.

TABLE 3

4-Phenylazo Derivatives - Insecticidal Data - Larvicides

| | Spodoptera littoralis | | Plutella xylostella | | Heliothis viriscens |
|---|---|---|---|---|---|
| | 400 mg/1 | 10 mg/1 | 400 mg/1 | 10 mg/1 | 480 mg/1 |
| 1 | 1 | 3 | | | |
| 2 | 1 | 1 | 1 | 5 | 5 |
| 4 | 1 | 1 | | | 5 |
| 5 | 1 | 1 | 1 | 3 | 2 |
| 6 | 1 | 1 | 1 | 5 | |
| 8 | 3 | 5 | | | |
| 10 | 1 | 1 | | | |
| 12 | 1 | 1 | 1 | 1 | 1 |
| 13 | 1 | 2 | | | |
| 14 | 1 | 1 | | | |
| 15 | 1 | 5 | | | |
| 16 | 1 | 5 | | | |
| 17 | 4 | 5 | | | |
| 18 | 1 | 1 | | | |
| 19 | 1 | 2 | | | 5 |
| 20 | 1 | 1 | 1 | 2 | |
| 21 | 1 | 5 | | | |
| 22 | 4 | 5 | | | |
| 24 | 1 | 1 | | | |
| 26 | 1 | 1 | | | |
| 27 | 1 | 1 | 1 | 4 | |
| 28 | 1 | 1 | 1 | 1 | 2 |
| 29 | 1 | 1 | 1 | 3 | |
| 30 | 1 | 1 | | | |
| 31 | 5 | 5 | | | |
| 33 | 4 | 5 | | | 5 |
| 36 | 1 | 1 | 1 | 1 | |
| 37 | 1 | 1 | | | |
| 38 | 1 | 1 | 1 | 1 | |
| 39 | 2 | 5 | | | |
| 40 | 5 | 5 | | | 5 |
| 41 | 5 | 5 | | | 5 |

Table 3 continued:

| | Spodoptera littoralis 400 mg/1 | Spodoptera littoralis 10 mg/1 | Plutella xylostella 400 mg/1 | Plutella xylostella 10 mg/1 | Heliothis viriscens 480 mg/1 |
|---|---|---|---|---|---|
| 42 | 2 | 5 | | | |
| 43 | 1 | 5 | | | |
| 44 | 3 | 3 | | | 5 |
| 45 | 5 | 5 | | | |
| 47 | 2 | 3 | | | |
| 48 | 1 | 4 | | | |
| 50 | 1 | 1 | | | |
| 51 | 2 | 5 | | | |
| 53 | 2 | 5 | | | |
| 55 | 1 | 5 | | | 5 |
| 56 | 5 | 5 | | | 5 |
| 57 | 1 | 1 | | | |
| 58 | 1 | 1 | 1 | 3 | 1 |
| 59 | 1 | 1 | 1 | 2 | 1 |
| 61 | 1 | [illegible] | | | 2 |
| 62 | 1 | [illegible] | | | |
| 65 | 1 | [illegible] | | | |
| 67 | 1 | 1 | | | |
| 69 | 1 | 1 | 1 | 1 | |
| 70 | 1 | 1 | 1 | 2 | |
| 71 | 1 | 1 | 1 | 1 | 1 |
| 72 | 1 | 1 | 1 | 1 | 1 |
| 73 | 1 | 1 | 1 | 1 | 5 |
| 74 | 1 | 5 | | | 1 |
| 75 | 1 | 1 | | | |
| 76 | 1 | 2 | | | |
| 77 | 1 | 1 | 1 | 1 | |
| 78 | 5 | 5 | | | |
| 79 | 1 | 1 | 1 | 2 | 5 |

BAD ORIGINAL

3-Phenylazo Derivatives

| | Spodoptera littoralis | | Plutella xylostella | | Heliothis viriscens |
|---|---|---|---|---|---|
| | 400 mg/1 | 10 mg/1 | 400 mg/1 | 10 mg/1 | 480 mg/1 |
| 80 | 5 | 5 | | | |
| 81 | 1 | 1 | | | 5 |
| 83 | 1 | 1 | 3 | 4 | 5 |
| 84 | 1 | 1 | | | 5 |

Test Procedure III

Spodoptera littoralis (Egyptian cotton leafworm)

Ovicidal assessments

One day old eggs of high viability were obtained from S. littoralis adults, suitable masses of approximately 200 eggs being taken from those laid on blotting paper cylinders. Upper layers of eggs were removed by brushing until the mass was reduced to a single layer. Each egg mass was then divided into two halves and mounted on microscope slides using double sided adhesive tape. One half of each mass was untreated and served as a control, the other half was chemically treated.

The test compound was prepared as an aqueous/acetone solution or suspension at the required concentration. The egg mass was then dipped for a 3 second period into the test solution at the desired concentration. The treated and untreated eggs were kept in an incubator at 26°C and 90% humidity for 4-5 days. The treated egg masses were assessed for percent hatch and compared for control mortality with the complementary untreated mass. Corrections for control mortality were made by application of Abbotts formula and the results expressed according to a scale of 1-5, where

1 = 90-100% mortality
2 = 75-89
3 = 50-74
4 = 25-49
5 = 0-24

These data are summarised in Table 4.

BAD ORIGINAL

TABLE 4

4-Phenylazo derivatives - Insecticidal Data - Ovicide

| | *Spodoptera littoralis* | |
|---|---|---|
| | 400 mg/1 | 10 mg/1 |
| 1 | 1 | 5 |
| 2 | 1 | 5 |
| 4 | 1 | 5 |
| 5 | 1 | 1 |
| 12 | 1 | 1 |
| 28 | 1 | 1 |
| 38 | 1 | 2 |
| 53 | 3 | 5 |
| 56 | 1 | 5 |
| 58 | 1 | 3 |
| 59 | 1 | 4 |
| 60 | 1 | 5 |
| 72 | 1 | 1 |
| 73 | 1 | 1 |
| 74 | 1 | 3 |
| 75 | 1 | 3 |
| 3-Phenylazo-Derivatives | | |
| 83 | 1 | 5 |
| 84 | 3 | 3 |

BAD ORIGINAL

0109172

CLAIMS

1. An N-phenyl-N'-benzoylurea of the general formula :

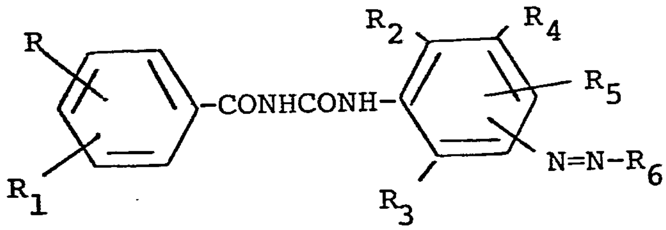

I

wherein R and $R_1$ are each independently a hydrogen or halogen atom, a $C_1$-$C_4$ alkyl or halogeno $C_1$-$C_4$ alkyl group; $R_2$ and $R_3$ are each independently a hydrogen or halogen atom or a $C_1$-$C_4$ alkyl group; $R_4$ and $R_5$ are each independently a hydrogen or halogen atom, or an alkyl, halogenoalkyl, alkoxy, halogenoalkoxy, alkenyl, halogenoalkenyl, alkenyloxy, halogenoalkenyloxy or alkynyl group;

$R_6$ is

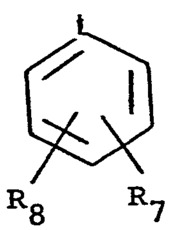

or

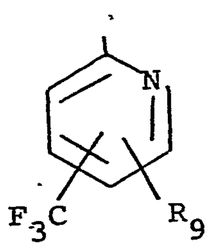

wherein $R_7$ and $R_8$ are each independently a hydrogen or halogen atom, or a nitro, alkyl, halogenoalkyl or cyano group; and $R_9$ is a halogen atom or an alkyl or halogenoalkyl group

2. A compound as claimed in claim 1 having the general formula

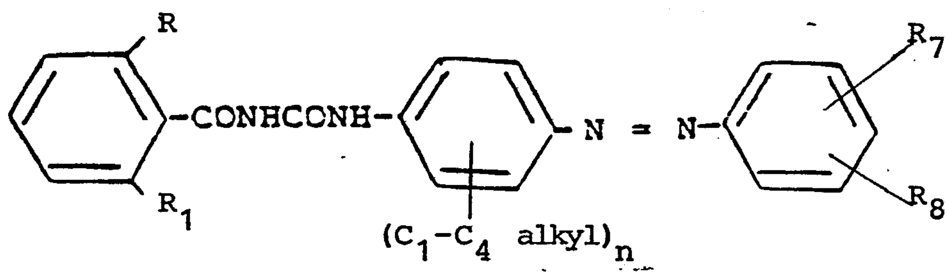

wherein R, $R_1$, $R_7$ and $R_8$ are as defined in Claim 1 and n is 1 or 2.

3. A compound as claimed in claim 2 wherein R and $R_1$ are each independently a hydrogen, fluorine or chlorine atom or a methyl group.

4. A compound as claimed in claim 2 or claim 3 wherein $R_7$ and $R_8$ are each a hydrogen atom.

5. A compound as claimed in any one of claims 2 to 4 wherein the $C_{1-4}$ alkyl group(s) is(are) at position(s) 3 and/or 5 of the phenyl ring.

6. A compound as claimed in claim 5 wherein the alkyl group(s) is (are) methyl.

7. A compound as claimed in claim 1 having the general formula

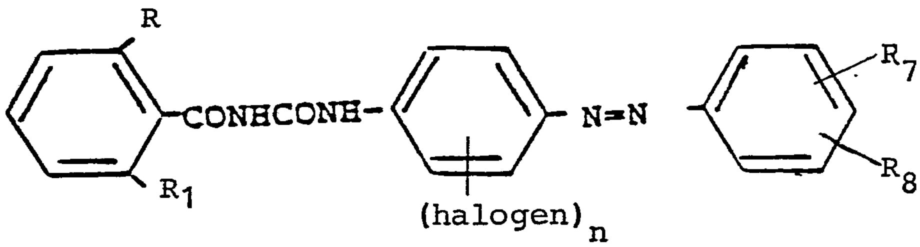

wherein R, $R_1$. $R_7$ and $R_8$ are as defined in claim 1 and n is 1 or 2.

8. A compound as claimed in claim 7 wherein R and $R_1$ are each independently a hydrogen, fluorine or chlorine atom or a methyl group.

9. A compound as claimed in claim 7 or claim 8 wherein $R_7$ and $R_8$ are each a hydrogen atom.

10. A compound as claimed in any one of claims 7 to 9 wherein the halogen atom(s) is(are) at positions 3 and/or 5 of the phenyl ring.

11. A compound as claimed in claim 10 wherein the halogen atom(s) are fluorine or chlorine atoms.

12. A process for the preparation of a compound as claimed in claim 1 which process comprises reacting a phenylazoaniline of the general formula:

BAD ORIGINAL

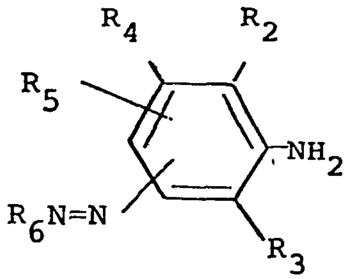

II

wherein $R_2$, $R_3$, $R_4$, $R_5$ and $R_6$ are as defined in claim 1 with a benzoylisocyanote of the general formula

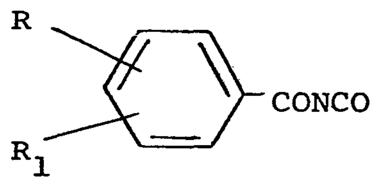

III

wherein R and $R_1$ are as defined in claim 1 in the presence of an appropriate solvent.

13. A process for the preparation of a compound as claimed in claim 1 which process comprises reacting a 4-arylazophenylisocyanate of the general formula

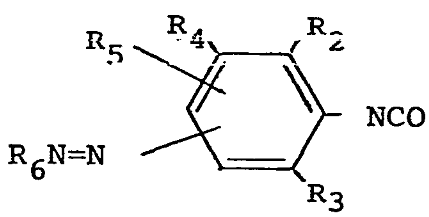

IV

wherein $R_2$, $R_3$, $R_4$, $R_5$ and $R_6$ are as defined in claim 1 with a benzamide of the formula

BAD ORIGINAL

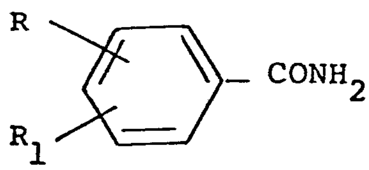

V

wherein R and $R_1$ are as above defined in the presence of an appropriate solvent

14. A pesticidal composition which comprises as an active ingredient at least one compound as claimed in claim 1 together with a diluent or carrier

15. A pesticidal composition as claimed in claim 14 which comprises from 0.0001 to 98 percent by weight of the active ingredient

16. A pesticidal composition as claimed in claim 15 which comprises from 5 to 50 percent by weight of the active ingredient

17. A method of killing or controlling insects which comprises applying to the insect and/or its habitat an insecticidal amount of at least one compound as claimed in claim 1

18. A method of killing or controlling insects which comprises applying to the insect and/or its habitat a composition as claimed in any one of claims 14 to 16.

BAD ORIGINAL

0109172

European Patent Office

# EUROPEAN SEARCH REPORT

Application number

EP 83 30 6090

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP-A-0 016 729 (CIBA-GEIGY)<br>* Claims *<br>--- | 1,14-18 | C 07 C 127/22<br>A 01 N 47/34 |
| P,X | CHEMICAL ABSTRACTS, vol. 98, Nr. 15, 11th April 1983, page 600, no. 125678g, Columbus, Ohio, US & JP - A - 57 175 158 (MITSUBISHI CHEMICAL INDUSTRIES CO., LTD.) 28-10-1982<br>--- | 1-18 | |
| P,X | CHEMICAL ABSTRACTS, vol. 98, no. 23, 6th June 1983, page 610, no. 197799v, Columbus, Ohio, US & JP - A - 57 188 561 (MITSUBISHI CHEMICAL INDUSTRIES CO., LTD.) 19-11-1982<br>----- | 1-18 | |
| | | | TECHNICAL FIELDS SEARCHED (Int. Cl. 3) |
| | | | C 07 C 127/00<br>A 01 N 47/00 |

The present search report has been drawn up for all claims

| Place of search | Date of completion of the search | Examiner |
|---|---|---|
| THE HAGUE | 26-01-1984 | MOREAU J.M. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03.82